# EUROPEAN PATENT APPLICATION

(11) **EP 2 068 528 A1**
(43) Date of publication of application: **10.06.2009**
(21) Application number: 07023550.2
(22) Date of filing: 05.12.2007
(51) Int. Cl.: H04L 29/06, H04J 3/06

(54) **Method and system for synchronizing the output of end-terminals**

(71) Applicant: Koninklijke KPN N.V., 2516 CK The Hague (NL); Nederlandse Organisatie voor Toegepast- Natuurwetenschappelijk Onderzoek TNO, 2628 VK Delft (NL)
(72) Inventor: Stokking, Hans Maarten, 2545 HK The Hague (NL); Van Deventer, Mattijis Oskar, 2264 DL Leidschendam (NL); Walraven, Fabian Arthur, 9711 VM Groningen (NL); Niamut, Omar Aziz, 3131 HV Vlaardingen (NL)
(74) Representative: Wuyts, Koenraad Maria

(57) **Abstract**

A Method is described for synchronizing the output of end-terminals. The method is used in a system comprising a station, which transmits a packetized stream to at least a first and second end-terminal. Each end-terminal comprises a variable delay unit and is connected to at least one synchronization unit for calculating delay information. Further, each end-terminal is capable of determining the arrival time of a packet in the stream. In the method a direct communication channel between the first end-terminal, the second end-terminal and the synchronization unit is established. First arrival time information of a packet arriving at the first end-terminal and second arrival time information of a packet arriving at the second end-terminal is received and delay information for the first and second end-terminal is calculated on the basis of the first and second arrival time information. Thereafter, the first end-terminal and second end-terminal are provided with the delay information enabling the variable delay unit of the end-terminals to delay transmission of the stream such that the output of the end-terminals is substantially synchronized.

## Description

### Field of the invention

The invention relates to a method and a system for synchronizing the output of end-terminals. The invention further relates to a synchronization unit and an end-terminal for use in such system.

### Background of the invention

New multi-media techniques such as Voice over IP (VoIP) and Internet Protocol Television (IPTV) open a whole range of new multi-media services. One type of these services enables a group of users to separately watch the same TV channel, while communicating with each other via text, audio and/or video using a separate real-time communication channel (e.g. VoIP) for the direct communication. Such services require that the output signal of the end-terminals is transmitted at the same time to all users in the group so that each user will experience a specific TV moment (e.g. a goal in a live football match) at the same time. In other words, the outputs of the display devices in the group, e.g. televisions, PDAs, PCs or a combination thereof, should be synchronized.

In an IPTV system the TV channel signal is typically transmitted as one or more packetized streams over a high-bandwidth IP network of an operator via edge routers and access nodes to the end-terminals of the subscribers to such services. During transmission of the streams, the packets are subjected to unknown delays in the network such as transmission delays, differences in network routes and differences in coding and decoding delays. As a consequence the temporal relationship between packets of audio and video streams received at one end-terminal and those received at another end-terminal will be disturbed.

To stream the IPTV content to the end-terminals usually the Real-time Transport Protocol (RTP) is used. RTP provides sequence numbering and time stamping. Using RTP the temporal relation in one stream (intra-stream synchronization) and between associated streams (inter-stream synchronization) can be restored.

In order to achieve group-synchronization or inter-destination synchronization (as required by the services as referred to above) further measures are necessary. Several techniques are known and all employ time-stamping and variable-delay buffers in the end-terminals. A variable-delay buffer is capable of delaying a stream for a certain amount of time.

In the article "An Application-Level QoS Comparison of Inter-Destination Synchronization Schemes for Continuous Media Multicasting" by Nunone et al.(IEICE trans. Commun. vol. 87, 2004, pp. 3057-3067) two types of inter-destination synchronization schemes are described. A first type uses a central synchronization master, which collects timing information from all end-terminals in the group and adjusts the output timing by distributing control packets to the end-terminals. A second type regards a distributed control scheme, wherein each end-terminal multicasts all timing information to all other end-terminals in the group. Implementation of such schemes in a typical IPTV system introduces however certain problems.

One problem related these synchronization schemes is the limited scalability. A central synchronization master is only capable of handling a limited number of end-terminals and a distributed scheme requires a multitude of multicast channels, which is a limited resource. A further problem related to the schemes is the requirement of an absolute or central clock. Such clock may difficult to achieve in practice.

One way of achieving group-synchronization in an IPTV system is the synchronization of the access nodes in the network of the operator so that all viewers connected with an end-terminal, e.g. a set-top box, to these synchronized access nodes are capable of viewing the broadcasted program at the same time. That way, the terminals will always be in sync, irrespective whether a particular service requires group-synchronization. This solution, which is described in more detail in a related European patent application no. 07020737.8, requires adaptation of the access nodes in the network.

It is desirable to provide group-synchronization for particular services without modification of the existing network infrastructure of the provider.

### Summary of the invention

It is an object of the invention to reduce or eliminate at least one of the drawbacks known in the prior art and to provide a method and system for synchronizing the output of end-terminals.

The method according to the invention is used in a system comprising a station, which transmits a packetized stream to at least a first and second end-terminal. Each end-terminal comprises a variable delay unit and each end-terminal is connected to at least one synchronization unit for calculating delay information. Further, each end-terminal is capable of determining the arrival time of a packet in the stream.

The method comprising the steps of: (i) establishing a direct communication channel, preferably using the Session Initiation Protocol (SIP), between the first end-terminal, the second end-terminal and the synchronization unit; (ii) receiving via the direct communication channel first arrival time information of a packet arriving at the first end-terminal and second arrival time information of a packet arriving at the second end-terminal; (iii) calculating delay information for the first and second end-terminal on the basis of the first and second arrival time information; and (iv) providing via the direct communication channel the first end-terminal and second end-terminal with the delay information enabling the variable delay unit of the end-terminals to delay transmission of the stream such that the output of the end-terminals is substantially synchronized.

The invention is based on the insight that a certain class of services, which enable a group of users to separately watch the same TV channel, while communicating with each other via text, audio and/or video, uses a separate, high quality, low-delay communication channel for the direct communication.

The Quality of Service (QoS) requirements of the direct communication channel require the direct communication channel to have an intrinsical low network delay. The direct communication channel thus provides a very efficient connection for exchanging synchronization information between the end-terminals of the group of users and the one or more synchronization units. Such low delay connection eliminates the use of an absolute clock in the synchronization of end-terminals.

Moreover, the method according to the invention provides a simple and low cost solution for providing group-synchronization in certain IPTV services, which does not require adaptation of the infrastructure of the network of the provider. Further, it synchronizes only those end-terminals, which really require group-synchronization.

In one embodiment, the first and second arrival time information are determined on the basis of the time of a first clock located at the first end-terminal and a second clock located at the second end-terminal.

The direct communication line allows efficient exchange of local clock information between the end-terminals and the one or more synchronization units.

In one embodiment the steps as defined by the method according to the invention are performed by the synchronization unit.

In a further embodiment the synchronization unit further performs the step of: (i) selecting from the delay information a first delay for use in the variable delay of the first end-terminal and a second delay for use in the variable delay of the second end-terminal;(ii) transmitting via the direct communication channel the first delay to the first end-terminal and/or the second delay to the second end-terminal. In this embodiment the synchronization unit centrally manages the synchronization of the output of the end-terminals.

The synchronization unit may located in a server, preferably a SIP server, or ,alternatively, in another embodiment the synchronization unit may be located in the first end-terminal and/or the second end-terminal.

In another embodiment according to the invention the first end-terminal and the second end-terminal comprise a first and second synchronization unit respectively, wherein each end-terminal comprises means for communicating arrival time information to the other end-terminal, wherein the method further comprises the steps of: (i) the first synchronization unit receiving via the direct communication channel the second arrival time information transmitted by the second synchronization unit; (ii) the second synchronization unit receiving via the direct communication channel the first arrival time information transmitted by the first synchronization unit; and (iii) the first and second synchronization unit calculating a first and second delay respectively on the basis of the first and second arrival time information enabling the variable delay unit in the first and second end-terminal to delay transmission such that the output of the group of end-terminals is substantially synchronized. This way each end-terminal comprises a synchronization unit thus enabling each end-terminal to determine the delay information by itself.

In a further embodiment at least one synchronization unit further performs the steps of: (i) obtaining the transmission rate of the stream; (ii) selecting a reference packet; (iii) calculating the arrival time of the reference packet at each end-terminal; and (iv) determining the delay information by calculating the delays for each end-terminal relative to the most lagged end-terminal.

In yet a further embodiment the packet in the stream comprises a time-stamp and/or a frame number. In this embodiment the synchronization information, including the delay information, is determined on the basis of the information provided by the packet.

In one embodiment the synchronization information is carried by the SIP protocol, preferably by the SIP INFO message associated with the direct communication channel. In another embodiment the synchronization information is carried by the RTP protocol associated with the direct communication channel or carried by the RTCP protocol associated with the RTP streams for audio, video and/or text or carried by the codec(s) for audio, video and/or text.

In the method according to the invention the synchronization information is carried by the protocol which is used for setting up and maintaining the direct communication channel (or session) between the end-terminals in a group to which the end-terminals are connected to. In other words, one or more protocol for providing group synchronization is piggybacked over the protocols used for setting up and maintaining the direct communication channel.

In a further embodiment the direct connection between the first terminal and the second terminal is established for setting up a communication session between the first end-terminal and a second end-terminal.

The invention further relates to a system for synchronizing the output of end-terminals. The system comprises: (i) a broadcasting station transmitting a packetized stream; (ii) at least a first end-terminal and a second end-terminal, each end-terminal comprising a variable delay unit and being capable of determining arrival time information of a packet in the stream; (iii) means for establishing a direct communication channel between the first end-terminal, the second end-terminal and at least one synchronization unit; and (iv) the synchronization unit comprising: means for receiving via the direct communication channel first arrival time information of a packet arriving at the first end-terminal, means for receiving via the direct communication channel second arrival time information of a packet arriving at the second end-terminal, means for calculating delay information for the first and second end-terminal on the basis of the first and second arrival time information, and means for providing the delay information via the direct communication channel to the first end-terminal and second end-terminal.

In a further aspect the invention relates to a synchronization unit for synchronizing the output of at least a first and second end-terminal. The first end-terminal and the second end-terminal are connected via a direct communication channel to the synchronization unit. The synchronization unit comprises: (i) means for receiving via the direct communication channel first arrival time information of a packet from a packetized stream arriving at the first end-terminal and receiving via the direct communication channel second arrival time information of a packet arriving at the second end-terminal, (ii) means for calculating delay information for the first and second end-terminal on the basis of the first and second arrival time information, and (iii) means for transmitting via the direct communication channel the delay information to the first end-terminal and second end-terminal node.

In one embodiment, the synchronization unit is located in a server, preferably a SIP server, the first end-terminal and/or the second end-terminal, or in a conference bridge.

In yet another aspect the invention relates to an end-terminal for use in a system as described above comprising: (i) a variable delay unit; (ii) means for transmitting the arrival time of a packet in the stream via the direct communication channel to the synchronization unit; and (iii) means for receiving delay information for the variable delay unit via the direct communication channcl enabling the end-terminal to transmit the output signal to the display unit at a predetermined point in time.

The invention will be further illustrated with reference to the attached drawing, which schematically show embodiments according to the invention. It will be understood that the invention is not in any way restricted to these specific embodiments.

### Brief description of the drawings

Fig. 1 depicts an exemplary embodiment of a centrally synchronized system.
Fig. 2 depicts the flow of information in a system according to the invention comprising three end-terminals and a central synchronization unit.
Fig. 3 depicts an exemplary embodiment of a distributed system.

### Detailed description

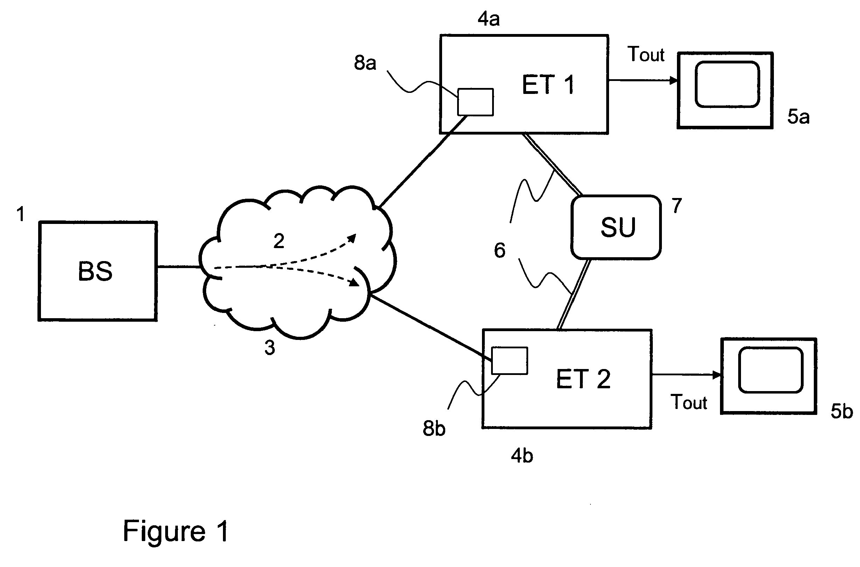

Fig. 1 illustrates a first system according to the invention. A broadcast station (BS) 1, preferably an IPTV system, transmits a packetized transport stream 2, typically a multicast transport stream, via an IP network 3 of an operator to a number of access nodes. An access node may be an Digital Subscriber Line Access Multiplexer (DSLAM), an Cable Modem Termination System (CMTS), an optical access node or an edge router.

The audio, video and/or text content in the stream may be compressed using e.g. MPEG-2 or MPEG-4. Further, the Real-time Transport Protocol (RTP) and the Real-time Transport Control Protocol (RTCP) may be used to stream the IPTV content over the network. RTCP provides out-of-band control information for an RTP flow. The services provided by RTP include sequence numbering, time stamping and delivery monitoring allowing synchronization of the packets in one stream and between associated streams so that consecutive frames in a stream arc played at the correct time and in the correct time intervals.

Each access node is connected to a set of end-terminals (4a,4b, ...;ET1,ET2, ...) typically set-top boxes, each being connected to one or more information presentation units 5a,5b. The sets of end-terminals form a group of end-terminals to which one or more IPTV services may be delivered. The information presentation unit may be a television, a personal computer, a personal digital assistant (PDA) or any other device capable of presenting the audio/video signal to a user. The end-terminal may use the Internet Group Management Protocol (IGMP) to request the access node to transmit a selected TV channel to the end-terminal.

In a first step of the method according to the invention, a direct communication session between the end-terminals of the users is established. This direct communication session, which may comprise one or more direct communication channels 6, is set up by a particular service which offers real-time communication between the users of the service, while - at the same time - all watching the same TV program in a substantially synchronized way.

Because of the Quality of Service (QoS) requirements, such direct multimedia communication session uses one or more low delay, direct communication channels for exchanging voice, video, and/or text data. The direct communication channel may be established using a dedicated Ethernet virtual LAN (VLAN), a dedicated Multi Protocol Label Switching (MPLS) path or a dedicated IP Diffserv stream. Such communication channels use different routes, buffers and QoS settings then the communication paths used for TV signals, e.g. multicast streams, which are optimized for efficient use of the network and picture quality. Typically, the Session Initiation Protocol (SIP) is used for setting up the session. Further, RTP and RTSP are used for the transport of the media streams and the associated out-of-band control information.

The one or more direct communication channels between the end-terminals in the session are also used for exchanging synchronization information between the end-terminals. In other words, the synchronization protocol is piggybacked over one or more protocols which set up and maintain the direct communication session.

For instance, the synchronization information may be carried by the SIP protocol, for instance using the SIP INFO method, which is intended to allow session-related control information generated during a session to be transmitted along the SIP signaling path (S. Donovan, The SIP INFO method, RFC-document 2976 of the IETF).

Alternatively, synchronization information packets may be transported in one or more RTP streams associated with the communication session. In this embodiment SIP establishes separate RTP-streams for audio, video and/or text and the synchronization information packets. Further, the synchronization information may be piggybacked over a RTCP stream associated with one or more RTP streams or, alternatively, over one or more codecs for (de)coding and/or (de)compressing the audio, video and/or text streams.

All these embodiments make use of the existing infrastructure for a particular service offering real-time communication between the users of the service and - at the same time - synchronization of the TV programs viewed by the users of the service.

The use of one or more direct communication channels of the communication session as a low delay communication channel for exchanging synchronization information allows for several alternative synchronization schemes.

Synchronization of the output of the end-terminals to the group of users is realized by a synchronization unit 7 connected via the one or more direct communication channels to the end-terminals. It allows the end-terminals to compensate for the network delays in the IP network 3 (e.g. the processing-, queuing-, transmission- and propagation delays in the network and the delay caused by network congestion, which occurs when a link or node is carrying too much data). To that end, each end-terminal 4a,4b comprises a variable-delay buffer 8a,8b capable of delaying the transmission of the stream to be transmitted to the presentation units.

Fig. 1 illustrates a synchronization scheme in which the synchronization unit 6 centrally collects information from the end-terminals via the direct communication channel and calculates on the basis of this information delay information for the variable-delay buffer in each end-terminal. The algorithm used by the synchronization units assumes that the frame-rate, i.e. the number of frames per second of the streaming content (e.g. video), is known.

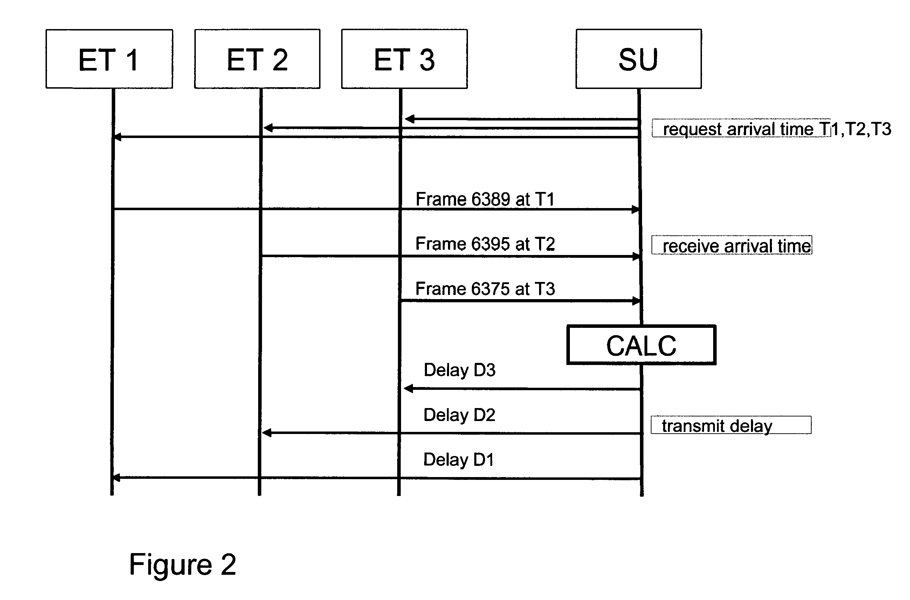

The information transfer between the synchronization unit and the end-terminals is illustrated in more detail in Fig. 2. In a first step, the synchronization unit request the end-terminals to send the arrival time information of a particular frame in the stream via the direct communication line. The end-terminals will send this information, typically RTP information of a frame including the frame number and the time of arrival (T1,T2,T3) of the frame at the end-terminals, to the synchronization unit via the direct communication channel. Further, the synchronization unit 7 is capable of selecting one of the frame numbers, preferably the lowest or highest reported by the end-terminals, as a reference frame and calculating for each end-terminal the time related to this reference frame using a known frame-rate. Thereafter, the synchronization unit determines the most "lagged" end-terminal and calculates the delays for the other end-terminal or end-terminals and subsequently transmits these delays via the direct communication line to the end-terminals.

In a second step, the synchronization unit in Fig. 2 receives the following arrival time information from the end-terminals ET1, ET2 and ET3:
ET1 received frame 6389 at 14:46:59.2645 (T1)
ET2 received frame 6395 at 14:47:05.4112 (T2)
ET3 received frame 6375 at 14:46:59.7600 (T3)

Given a frame rate of 25 frames per second, the clock times for the lowest frame number, i.e. frame 6375, for each end-terminal is calculated by the synchronization unit in a third step. The first end-terminal received frame 6375 at T1-(6389-6375)/25 = 14:46:58.7045 (T1'), the second end-terminal received frame 6375 at T2-(6395-6375)/25 = 14:47:04.6112 (T2') and the third end-terminal received frame 6375 at T3 = 14:46:59.7600 (T3'-T3):
ET1 received frame 6375 at 14:46:58.7045 (T1')
ET2 received frame 6375 at 14:47:04.6112 (T2')
ET3 received frame 6375 at 14:46:59.7600 (T3'=T3)

The most "lagged" end-terminal, i.e. the end-terminal which received the reference frame 6375 last, is end-terminal ET2. Finally, the synchronization unit determines the delays (D1,D2,D3) for each end-terminal:
Delay D1 for ET1 = T2' - T1' - 5.9067
Delay D2 for ET2 = 0
Delay D3 for ET3 = T2' - T3' = 4.8512

These delays are subsequently sent in a final, forth step via the direct communication channel to the end-terminals and used by the variable delay buffer to delay transmission of the stream to the presentation unit. That way the content of a particular frame in the originally transmitted stream is transmitted to all users in the group at the same time Tₒᵤₜ as schematically indicated in Fig. 1.

In the central scheme described the time for determining the arrival time was provided by a central clock. Such use of a central clock is however not required. The direct, low delay communication channel between the end-terminals allows the use of local clocks, e.g. the clocks located at the end-terminals, to synchronize the output of the end-terminals. The end-terminals are capable of sharing their clock time with each other via the direct communication line.

In reporting the frame numbers to the central synchronization unit, the end-terminals not only report their own clock time, but also the clock time of the others. This way the synchronization unit first may synchronize the clocks of the different end-terminals by (i) picking one clock as the reference clock, (ii) calculate per clock the difference with the reference clock, and (iii) adjust all clock times such that they are reference clock times. Thereafter, the delays may be calculated as described above in the central clock/central synchronization unit scheme.

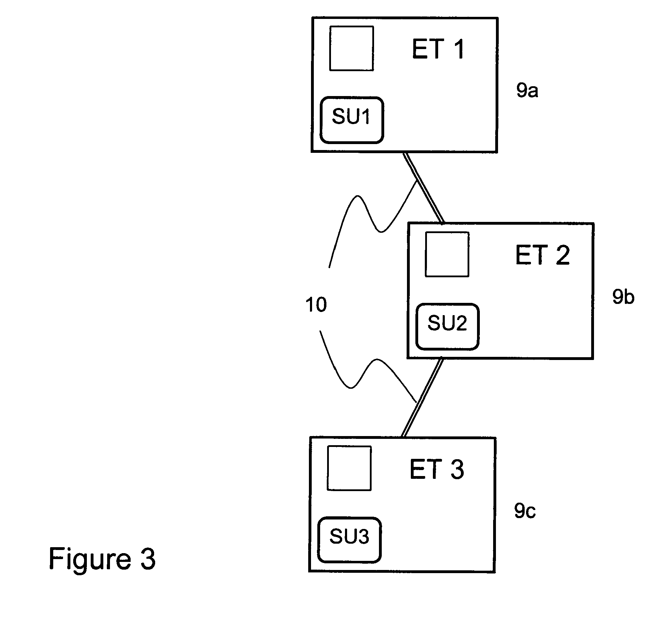

In a further embodiment a number of synchronization units may be used, which are distributed over the network. Fig. 3 depicts an example of such distributed scheme wherein each end-terminal 9a,9b,9c comprises a synchronization unit SU1,SU2,SU3. Each synchronization unit is capable of transmitting the arrival time information to all other synchronization units via the one or more direct communication channels 10. Each synchronization unit is capable of calculating the appropriate delay time for the variable-delay unit in a similar way as discussed above.

The synchronization unit may be a server in the network hosting the synchronization function, e.g. a software program, or alternatively it may be a functional unit in one or more end-terminals or in a server, such as a SIP server, or in a conference bridge that connects the media streams of two or more end-terminals.

The invention is not limited to the embodiments described above, which may be varied within the scope of the accompanying claims.

## Claims

1. Method for synchronizing the output of end-terminals in a system comprising a station transmitting a packetized stream to at least a first and second end-terminal, wherein each end-terminal comprises a variable delay unit, each end-terminal is capable of determining the arrival time of a packet in the stream and each end-terminal is connected to at least one synchronization unit for calculating delay information, the method comprising the steps of:
- establishing a direct communication channel between the first end-terminal, the second end-terminal and the synchronization unit;
- receiving via the direct communication channel first arrival time information of a packet arriving at the first end-terminal and second arrival time information of a packet arriving at the second end-terminal;
- calculating delay information for the first and second end-terminal on the basis of the first and second arrival time information;
- providing via the direct communication channel the first end-terminal and second end-terminal with the delay information enabling the variable delay unit of the end-terminals to delay transmission of the stream such that the output of the end-terminals is substantially synchronized.

2. Method according to claim 1, wherein the first and second arrival time information are determined on the basis of the time of a first clock located at the first end-terminal and a second clock located at the second end-terminal.

3. Method according to any of claims 1 to 2, wherein the system comprises one synchronization unit performing the steps as defined in claim 1.

4. Method according to claim 3, wherein the synchronization unit further performs the step of:
- selecting from the delay information a first delay for use in the variable delay of the first end-terminal and a second delay for use in the variable delay of the second end-terminal;
- transmitting via the direct communication channel the first delay to the first end-terminal and/or the second delay to the second end-terminal.

5. Method according to any of claims 1 to 4, wherein the synchronization unit is located in a server, preferably a SIP server, the first end-terminal and/or the second end-terminal.

6. Method according to any of claims 1 to 3, wherein the first and second end-terminal comprise a first and second synchronization unit respectively, wherein each end-terminal comprises means for communicating arrival time information to the other end-terminal, the method further comprising the steps of:
- the first synchronization unit receiving via the direct communication channel the second arrival time information transmitted by the second synchronization unit;
- the second synchronization unit receiving via the direct communication channel the first arrival time information transmitted by the first synchronization unit;
- the first and second synchronization unit calculating a first and second delay respectively on the basis of the first and second arrival time information enabling the variable delay unit in the first and second end-terminal to delay transmission such that the output of the group of end-terminals is substantially synchronized.

7. Method according to any of claims 1 to 6, wherein at least one synchronization unit further performs the steps of:
- obtaining the transmission rate of the stream;
- selecting a reference packet;
- calculating the arrival time of the reference packet at each end-terminal;
- determining the delay information by calculating the delays for each end-terminal relative to the most lagged end-terminal.

8. Method according to any of claims 1 to 7, wherein the packet in the stream comprises a time-stamp and/or a frame number.

9. Method according to any of claims 1 to 8, wherein the synchronization information is carried by the SIP protocol, preferably by the SIP Info message associated with the direct communication channel.

10. Method according to any of claim 1 to 8, wherein the synchronization information is carried by the RTP protocol associated with the direct communication channel or carried by the RTCP protocol associated with the RTP streams for audio, video and/or text or carried by the codec(s) for audio, video and/or text.

11. Method according to any of claim 1 to 10, wherein the direct connection between the first terminal and the second terminal is established for setting up a communication session between the first end-terminal and a second end-terminal.

12. System for synchronizing the output of end-terminals comprising:
- a broadcasting station transmitting a packetized stream;
- at least a first end-terminal and a second end-terminal, each end-terminal comprising a variable delay unit and being capable of determining arrival time information of a packet in the stream;
- means for establishing a direct communication channel between the first end-terminal, the second end-terminal and at least one synchronization unit;
- the synchronization unit comprising: means for receiving via the direct communication channel first arrival time information of a packet arriving at the first end-terminal, means for receiving via the direct communication channel second arrival time information of a packet arriving at the second end-terminal, means for calculating delay information for the first and second end-terminal on the basis of the first and second arrival time information, and means for providing the delay information via the direct communication channel to the first end-terminal and second end-terminal.

13. A synchronization unit for synchronizing the output of at least a first and second end-terminal wherein the first end-terminal and the second end-terminal are connected via a direct communication channel to the synchronization unit, the synchronization unit comprising:
- means for receiving via the direct communication channel first arrival time information of a packet from a packetized stream arriving at the first end-terminal and receiving via the direct communication channel second arrival time information of a packet arriving at the second end-terminal,
- means for calculating delay information for the first and second end-terminal on the basis of the first and second arrival time information, and
- means for transmitting via the direct communication channel the delay information to the first end-terminal and second end-terminal node.

14. A synchronization unit according to claim 13, wherein the synchronization unit is located in a server, preferably a SIP server, the first end-terminal and/or the second end-terminal, or a conference bridge.

15. An end-terminal for use in a system according to claim 12 comprising:
- a variable delay unit;
- means for transmitting the arrival time of a packet in the stream via the direct communication channel to the synchronization unit; and
- means for receiving delay information for the variable delay unit via the direct communication channel enabling the end-terminal to transmit the output signal to the display unit at a predetermined point in time.
